Europäisches Patentamt

(19) European Patent Office

Office européen des brevets

(11) Publication number : **0 492 977 A1**

## (12) EUROPEAN PATENT APPLICATION

(21) Application number : **91311787.5**

(22) Date of filing : **19.12.91**

(51) Int. Cl.⁵ : **A62C 8/06, B32B 17/02**

(30) Priority : **21.12.90 GB 9027786**

(43) Date of publication of application :
**01.07.92 Bulletin 92/27**

(84) Designated Contracting States :
**AT BE CH DE DK ES FR GB GR IT LI LU NL SE**

(71) Applicant : **ENVIRONMENTAL SEALS LIMITED**
**Warcott Lodge, Roman Road, Maydensole,**
**Dover, Kent, CT15 5HR (GB)**

(72) Inventor : **Ward, Derek Alfred**
**Warcott Lodge, Roman Road**
**Maydensole, Dover, Kent CT15 5HR (GB)**

(74) Representative : **Fry, Alan Valentine et al**
**FRY HEATH & SPENCE, St. Georges House, 6**
**Yattendon Road**
**Horley, Surrey RH6 7BS (GB)**

(54) Improvements in and relating to fire barriers and their method of manufacture.

(57)    A fire barrier or curtain which comprises a
sheet of woven glass fibrous cloth, typically of
the thickness of 0.75mm which is coated on one
side with an intumescent material and on its
other side with a second coating of intumescent
material or a layer of metallic foil, or a facing of
neoprene or silicon.

EP 0 492 977 A1

This invention relates to intumescent fire barriers and to methods of producing the same. More especially, but not exclusively, this invention concerns intumescent fire barriers in sheet or curtain form having sufficient flexibility to enable the barrier to overlie an area to be protected or to be applied directly to the surface of a structure such as timber trusses, concrete ceilings or brick walls to provide for that structure a fire resistent barrier.

Currently available fire barriers for use in, for example, loft areas of buildings are conventionally produced in the form of glass fibre sheets which are not only bulky and heavy to install but cannot be used in sterile areas used, for example, to store and operate computers. Other available fire barriers include those constructed from timber and plaster board, block or brick work. Such barriers have limited application, are difficult to construct and add to the weight imposed on a building significantly.

The present invention sets out to provide a fire barrier or curtain which can be used in sterile areas and which does not suffer from many of the disadvantages inherent in existing fire barriers.

According to the present invention in one aspect there is provided a fire barrier or curtain which comprises a sheet of woven glass fibrous cloth coated on one side with an intumescent material and on its other side with a second coating of intumescent material or a layer of metallic foil or a facing of neoprene or silica.

For a sheet which has on one of its sides a layer of metallic foil, the layer may comprise a hot metal foil, a reinforced foil or a foiled craft paper adhered to the surface of the cloth.

In another aspect, the invention provides a method of producing a fire barrier or curtain which comprises the steps of coating a sheet of woven glass fibrous cloth on one side with a coating of intumescent material and on its other side with a second coating of intumescent material, a layer of metallic foil, or a facing of neoprene or silicon.

The invention will now be described by way of example only with reference to the following examples of fire barriers or cutains in accordance with the invention.

## EXAMPLE 1

A woven cloth of glass fibres is coated on both sides with an intumescent coating in the form of an intumescent paint which is known in the trade as Pyroplas C, also Bayer Coating.

## EXAMPLE 2

A woven cloth of glas fibres is coated on one side with a coating of intumescent material as described above and has bonded to its other side a layer of hot melt metallic foil.

## EXAMPLE 3

A woven sheet of glass fibres is coated on one of its sides with a coating of intumescent material as described above and has bonded to its other side a layer of reinforced foil craft paper.

## EXAMPLE 4

A woven cloth of glass fibres is coated on one side with a coating of intumescent material as described above and has bonded to its other side a welded foil of metallic material.

## EXAMPLE 5

A woven cloth of glass fibre material is coated on one side with a coating of an intumescent material and on its other side with a facing of neoprene or silicon.

Typically the thickness of a sheet in accordance with the invention is 0.75 mm. As mentioned previously it can be applied as a curtain to a structure to be protected against fire or can be attached directly to a surface to be fireproofed by any conventional means. The coatings applied to both sides of the cloth ensures that the barrier can be used in sterile areas.

Fire curtains in accordance with the invention are relatively light in weight and are capable of withstanding temperatures in excess of 1500°C. Also, they can readily be fitted to timber, e.g. trusses, by fire board strip materials and when fixed to concrete or brickwork can simply be held in place with metal strips either nailed to the brick or concrete by masonry nails or by screws in a conventional manner. Furthermore, fire curtains in accordance with the invention can readily be fixed to the top of metal partitions or to metallic "T" straps of suspended ceilings by self-tapping screws or pop rivets.

Upon a fire occurring the intumescent content of the barrier is activated and expands to protect the structure to which it has been applied from flame damage for a period, for example, of up to two hours.

It will be appreciated that the intumescent fire barriers described above are merely exemplary of fire barriers in accordance with the invention and that modifications can readily be made thereto without departing from the true scope of the invention.

## Claims

1. A fire barrier which is characterised in that it comprises a sheet of woven glass fibrous cloth coated on at least one side with an intumescent material.

2. A fire barrier as claimed in claim 1 characterised in that both sides of the woven glass fibrous cloth sheet are coated with an intumescent material.

3. A fire barrier as claimed in claim 1 characterised in that the sheet of woven glass fibrous cloth is coated on one side only with an intumescent material and on its other side with a layer of metallic foil.

4. A fire barrier as claimed in claim 1 characterised in that the sheet of woven glass fibrous cloth is coated on one side only with an intumescent material and on its other side with a layer of neoprene.

5. A fire barrier as claimed in claim 1 characterised in that the sheet of woven glass fibrous cloth is coated on one side only with an intumescent material and on its other side with a coating of silica.

6. A fire barrier as claimed in claim 3 characterised in that the metallic foil consists of a hot metal foil.

7. A fire barrier as claimed in any one of the claims 1 to 6 characterised in that the intumescent coating is in the form of an intumescent paint, known in the trade as Pyroplas C.

8. A fire barrier as claimed in any one of claims 1 to 7 characterised in that the thickness of the sheet of woven glass fibrous cloth is 0.75mm.

9. A method of producing a fire barrier which is characterised by the steps of coating a sheet of woven glass fibrous cloth on one side with a coating of intumescent material and on its other side with a coating of intumescent material or a layer of metallic foil or a facing of neoprene or a facing of silicon.

European Patent Office

**EUROPEAN SEARCH REPORT**

Application Number

EP   91 31 1787

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 052 305 (IMPERIAL CHEMICAL INDUSTRIES)<br>* page 1, line 7 - line 9 *<br>* page 1, line 31 - line 32 *<br>* page 1, line 41 - line 62 *<br>* page 3, line 14 - line 37 *<br>--- | 1,2,7 | A62C8/06<br>B32B17/02 |
| Y | NL-A-7 504 840 (WEVERIJ DE PLOEG)<br>* page 2, line 4 - page 4, line 7 * | 1,2,7 | |
| A | --- | 9 | |
| Y | US-A-3 934 066 (MURCH)<br>* column 2, line 39 - column 3, line 47 *<br>--- | 1,3 | |
| Y | WO-A-8 401 301 (BUDMIGER)<br>* page 9, line 22 - page 11, line 28 * | 3 | |
| A | --- | 9 | |
| A | TECHNICA.<br>no. 13, 1982, ZURICH CH<br>page 1242; 'Beschichtetes Glasfasergewebe schuetzt beim Lichtbogenschweissen'<br>--- | 4 | TECHNICAL FIELDS SEARCHED (Int. Cl.5) |
| P,X | EP-A-0 404 419 (ENVIRONMENTAL SEALS)<br><br>* column 1, line 1 - column 2, line 12 *<br>* column 2, line 31 - line 40 *<br>* column 4, line 46 - line 54 * | 1,2,7,8,<br>9 | A62C<br>B32B |

-----

The present search report has been drawn up for all claims

| Place of search | Date of completion of the search | Examiner |
|---|---|---|
| THE HAGUE | 14 APRIL 1992 | KAPOULAS T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)